# EUROPEAN PATENT SPECIFICATION

(11) **EP 4 089 492 B1**
(45) Date of publication and mention of the grant of the patent: **03.06.2026**
(21) Application number: 21193918.6
(22) Date of filing: 31.08.2021
(51) Int. Cl.: G05B 19/418

(54) **SYSTEM AND METHOD FOR GENERATING AND DISPLAYING TARGETED INFORMATION RELATED TO ROBOTS WORKING IN AN OPERATING ENVIRONMENT**
SYSTEM UND VERFAHREN ZUR ERZEUGUNG UND ANZEIGE GEZIELTER INFORMATIONEN IN ZUSAMMENHANG MIT IN EINER BETRIEBSUMGEBUNG ARBEITENDEN ROBOTERN
SYSTÈME ET PROCÉDÉ POUR GÉNÉRER ET AFFICHER DES INFORMATIONS CIBLÉES RELATIVES À DES ROBOTS TRAVAILLANT DANS UN ENVIRONNEMENT D'EXPLOITATION

(30) Priority: 11.05.2021 US 202117316770
(43) Date of publication of application: 16.11.2022
(73) Proprietor: Rapyuta Robotics Co., Ltd., Tokyo 135-0023 (JP)
(72) Inventor: SHARMA, Abhishek, Tokyo (JP)
(74) Representative: FRKelly

(56) References cited:
- CN-A- 109 739 680
- US-A1- 2019 392 644
- US-A1- 2021 129 324

## Description

### TECHNICAL FIELD

The embodiments herein relate to generating, displaying and debugging targeted information related to a plurality of robots working in an operating environment and, more particularly, generating targeted information for fixing or diagnosing faults or errors encountered in the operating environment and displaying the targeted information.

### BACKGROUND

Usage of robots in the industry has been exponentially increasing. Robots are now being used for both personal use and commercial space. In order to tap the potential of robots, a large number of different types of robots are employed within a particular operating environment, for example, a warehouse floor. Existing systems do not provide live targeted information relevant for an end-user while handling problems or finding solutions related to robots in an operating environment.

US 2019/392644 relates to an augmented reality (AR) system for diagnosis, troubleshooting and repair of industrial robots. The disclosed diagnosis guide system communicates with a controller of an industrial robot and collects data from the robot controller, including a trouble code identifying a problem with the robot. The system then identifies an appropriate diagnosis decision tree based on the collected data, and provides an interactive step-by-step troubleshooting guide to a user on an AR-capable mobile device, including augmented reality for depicting actions to be taken during testing and component replacement. The system includes data collector, tree generator and guide generator modules, and builds the decision tree and the diagnosis guide using a stored library of diagnosis trees, decisions and diagnosis steps, along with the associated AR data.

US 2021/129324 relates to a method for problem diagnosis in a robot system having one or more robots includes the steps of: a) receiving (S1) a first problem message from a robot of the robot system, the first problem message including one or more data elements descriptive of a problem experienced by the robot; b) receiving (S1) a subsequent problem message from a robot of the robot system; c) if a time elapsed between receipt of the subsequent problem message and receipt of an immediately preceding problem message is shorter than a predetermined threshold (S2), adding the subsequent problem message to a message set which comprises the immediately preceding problem message (S3); and d) if the time elapsed is longer than the predetermined threshold (S2), terminating (S4) the message set of the immediately preceding problem message without adding the subsequent problem message, and establishing (S5, S6) a new message set.

CN 109 739 680 relates to a method comprising the steps: receiving a service request which is used for starting a service processing flow of an application system; when the service processing flow is abnormal, obtaining service scene information corresponding to the network request; generating simulation processing information corresponding to the service request according to the service scene information; and determining the fault information of the application system according to the simulation processing information. The technical problem that in the prior art, a problem scene cannot be reproduced, and consequently the system fault reason searching efficiency is low is solved, and the program repairing efficiency of an application system is improved.

### SUMMARY

Systems, methods, computer programs, and user interfaces are provided for generating and displaying targeted information. In one embodiment, a node running on one or more robots executes one or more behaviors related to an active plan of the robots working in an operating environment. The node creates one or more snapshots related to the executing behaviors, with each snapshot including fields assigned values. Information is captured based on a parent context related to the executing behaviors, including parent information of the active plan. The node populates the snapshot fields with values related to the captured information, operating environment, and robots. The snapshots are closed with results of the behavior execution. A reporter node running on the robots aggregates and reports the closed snapshots as targeted information for display and debugging.

In one embodiment, the node adds metadata to the snapshot fields, including active entry points assigned to agents, utility functions, robots executing the plan, switching between robots, conflicts, and gain. The system provides diagnosis based on this targeted information. The system can receive errors related to robots and report targeted information to resolve these errors.

In one embodiment, the system evaluates tasks assigned to robots, determines time spent executing behaviors, and visually reports this information. The visual reporting may include shapes whose size indicates time taken or spent on tasks and behaviors.

In one embodiment, the system integrates plugins like rosbag collection modules for real-time error diagnosis. Users can provide start and end times for diagnosing errors, and the system provides visual representations and enables rosbag analysis for error diagnosiss.

In one embodiment, the system handles collaboration between multiple robots. When a second robot becomes available to assist a first robot, the system closes the snapshot for the first robot's behavior and creates a new snapshot for their collaborative behavior. The system updates robot IDs, task details, and verifies performance gains from the collaboration.

In one embodiment, the system handles errors in robot collaboration. If an error occurs during assistance, the system identifies the faulting robot, initiates an automatic repair process to find another available robot, and retriggers plans or behaviors with the new robot if available.

### BRIEF DESCRIPTION OF THE FIGURES

The embodiments disclosed herein will be better understood from the following detailed description with reference to the drawings, in which:
FIG. 1 illustrates an exemplary system for generating and displaying targeted information related to the plurality of different types of mobile robots working in an operating environment, according to an embodiment;
FIG. 2 is a flow diagram illustrating an exemplary process for generating and displaying targeted information related to the plurality of different types of mobile robots working in an operating environment, according to an embodiment;
FIG. 3 is a flow diagram illustrating another exemplary process for generating and displaying targeted information related to the plurality of different types of mobile robots working in an operating environment, according to an embodiment;
FIG. 4(A)-4(C) are state diagrams illustrating exemplary processes for generating and displaying targeted information related to the plurality of different types of mobile robots working in an operating environment, according to an embodiment;
FIG. 5(A)-5(B) are trace visualizations illustrating exemplary processes for generating and displaying targeted information related to the plurality of different types of mobile robots working in an operating environment, according to an embodiment.
FIG. 6 is a system diagram illustrating another exemplary system for generating and displaying targeted information, according to an embodiment.

### DETAILED DESCRIPTION

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The non-limiting embodiments herein refer to terms 'plan', agent, 'behavior', a collaboration between homogeneous and heterogeneous mobile robots, system-level components, robot level tasks, execution of plans or behaviors, etc. are described in the co-pending U.S. patent application Ser. No. 16/994,556, filed Aug. 15, 2020.

There is a need for a live debugger, tracer, recommendation, pattern recognizer, and other related systems that can diagnose/fix the problems faced by different types of robots in an operating environment or provide optimization information that can improve productivity or find solutions related to the robots working in an operating environment. Currently, for such systems, providing targeted, granular, contextualized, and relevant information to an end-user is a challenge.

The present invention solves a technical problem in the field of robotics systems (e.g. live debugger, tracer, recommendation, pattern recognizer, optimizer, etc.).. In existing systems, when a failure occurs, the robotics system streams world model information as it is, and the systems extrapolate the information from the world model. It becomes difficult for such systems to scale - as the number of robots increases, for example, to 100 robots. In such scenarios, it becomes difficult to analyze the world model and, later, use the world model data to identify and fix the issue behind the failure. These systems just report the World model that includes tons of information which results in streaming huge data. The existing systems then perform a postmortem on the bulk data, and then, the systems are not in a position to provide relevant solutions. In addition, a robotics expert has to spend time understanding the details of the tons of data and is required to provide meaning to this huge data before attempting to identify and fix the problem. As compared to existing systems, the present invention provides technical solutions that include providing a granular level of targeted and contextual diagnostic data that may be used for tracing and real-time debugging. Consider a scenario where a Behavior X (e.g., Navigation of a robot) fails or didn't succeed or is taking too long, and then, in the present invention, the investigation is reduced to analyzing the operation and checking instances when the failure happened. The end-user need not worry about tons of irrelevant data but focus on the specific robot behavior that failed. The system provides a summary of the failure at the robot's behavior level. So, the system now exposes the actual event that led to the failure rather than causing the user to compare the world model or make the user spend time on analyzing irrelevant data.

Furthermore, the system provides other technical solutions. In existing systems, a Snapshot is created and then closed, and once the Snapshot is closed, then the Snapshot gets reported to the Trace Collector node. The problem with this approach of existing systems is that if there is a long-running behavior or a plan and if a system crash happens or an error occurs or if there is a hard reboot of the system, such information is never relayed or exposed to the end-user. This indicates that the existing systems are not suitable for real-time debugging. Such systems just provide a post-mortem kind of analysis which is not useful. However, the present invention provides a real-time debugging of events. As the events are getting reported, the system provides a hierarchy of events for supporting the real-time debugging feature.

In addition, the system provides a direct representation of all events reported in the operating environment, with additional context including - where the error was reported and why the error was reported. This information may be integrated with environment-related events that are network friendly, can be reported and collected, which may be used to build the entire history. A lot of user's (e.g. warehouse manager, software developer, System integrator, etc.) time is saved as the user need not spend time integrating logs, rosbags, or time-stamping the various events as the system provides all the relevant details in a single dashboard for simplified access to the user.

The term "plan" can be defined in multiple ways and nowhere should it be construed as restrictive. The simplest way to describe a plan is a list of behaviours to be executed one after the other. It is a structure that is used to formulate more complex recipes or sub plans. There are various representations of such recipes or policies, which extend this simple description. The basic concept of plans is strongly related to finite automata, which not only allows the formulation of sequences of actions, but also of loops and conditional execution. Hence, a plan p in the set of Plans P is a structure of states and the transitions between them. In one of the embodiments, a plan 'charging' may contain two tasks: one for a set of robots to queue for charging and one for another set of robots to dock and get charged. In one embodiment, a plan may also include a "robot behaviour". Robot behaviour is a low level atomic activity, within a plan, executed by a robot under certain conditions. In another embodiment of the invention, the 'charging' plan includes three states: robot waiting state, robot docking state, and robot charging state. In one embodiment, the plan is a collection of states that represent stages during the execution of the plan.

A plan tree may include plans such as charging plan, navigation plan, autonomous mode plan, pick and place objects plan, lifting plan etc. The robots are shifted as per the states of the plan. Sometimes, the robot may be in a 'charging' state and later, they may be pulled out of the 'charging' state and shifted to 'autonomous mode' state of carrying and picking a pallet. So, for these two plans - 'charging' plan and 'autonomous pick and carry' plan, a sub-plan called 'navigation' plan may be used. A sub-plan is a portion of the plan that achieves one or more goals or a portion of the goal to be achieved by the plan.

Each pair of states in the plan may be linked by a transition. A transition is a condition that needs to be satisfied in order for a robot to traverse from its current state to the next state. In each state, one or more robots execute a set of sub-plans within the plan. The one or more robots may transition to the next state either after successful execution of the sub-plans, when the task fails, or when execution of sub-plans becomes irrelevant. The transition condition may be defined as a boolean expression including the different plan variable and plan variable values that needs to be satisfied in order to transition to the next plan state.

The system may include a plan execution engine that further includes a logic for executing a plan, allocating tasks by one or more heterogeneous robots and/or servers. A plan may include several sub-plans that in combination form the plan. Robot behaviour is a low level atomic activity, within a plan, executed by a robot under certain conditions. For example, a "robot charging" plan may include three states: robot waiting state, robot docking state, and robot charging state. Consider a user has developed a plan and a task allocation strategy for execution for a team of Automated Guided Vehicle (AGV)s and for execution for a team of forklifts. The plan includes functionalities like route planning, navigation, local obstacle avoidance, LiDAR scanners, which may be common for a team of forklifts and there may be some functionalities which may be different for forklifts. In a warehouse environment, the system, with the help of a plan execution engine, handles the coordination between heterogeneous devices- for example, a team of Automated Guided Vehicles (AGVs) assisting a team of Forklifts.

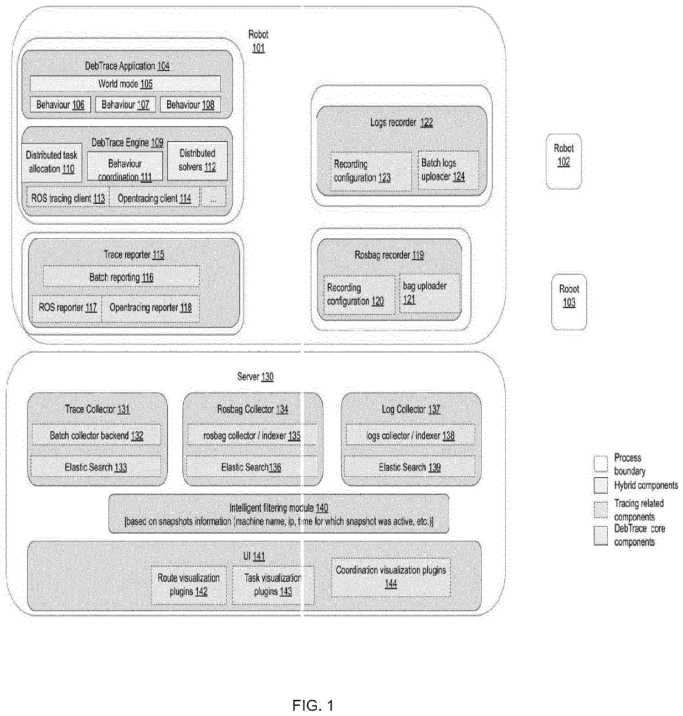

FIG. 1 illustrates an exemplary system for generating and displaying targeted information related to the plurality of different types of mobile robots working in an operating environment, according to an embodiment. The system generates targeted information based on various factors, including information related to at least one or more contextual, historical, patterns, trained data, etc., obtained during the navigation of the robots in the operating environment. The system generates and displays targeted information that includes obtaining contextual information while the robot is navigating or in any other state (idle, charging, waiting for another robot, dead, suspended, terminated, etc.) in the operating environment, and based on relevant data, for example, contextual information, historical information, patterns, etc, generating targeted information for resolving the requirements of the user. The system 100 includes one or more servers 130 and robots 101, 102, and 103. The server node, DebTrace (short for Debug & Trace) Server 130, executes software components DebTrace Collector 131, Rosbag Collector 134, Log Collector 137, Intelligent filtering module 140, UI 121, etc., while the robots 101-103, each execute nodes or software components DebTrace Application 104, DebTrace Engine 109, DebTrace reporter 115, Rosbag recorder 119, Logs collector 122, etc. In one embodiment, system 100 provides a live visual debugging experience that shows different states of the robots (also called agents) along with application metadata, at various intervals of time in history, etc. The DebTrace Engine 109 is a software module that executes a DebTrace application 104. The DebTrace Engine 109 includes multiple components like distributed task allocation 110, behavior coordination 111, distributed solvers 112, and external tracing clients (e.g. ROS tracing clients 113, Opentracing client 114,), etc. The DebTrace Engine 109 maintains a consistent state of all the plans, behaviors, and shares state information with other robots running the DebTrace Engines. Information received from robot sensors is processed by single or multiple components which perform various tasks, such as image processing or sensor fusion. Abstract information is sent to the World model 105. The Behavior components 106, 107, 108 contain all domain-specific behaviors. Each behavior communicates with actuation controllers which later communicate with the robotics hardware or software actuators. The UI module 121 can be used to input search queries to extract contextual, granular, and/or targeted information from the system.

The Distributed task allocation component 110 determines the task allocation of different tasks to different robots. Task allocation to robots may be determined at different stages of plan execution or in real-time, for example, when any of the robots assigned to a particular task breaks down, then the Distributed task allocation 110 component has to reassign the tasks to other robots that have not broken down (are available) and are capable to execute the task. The Trace reporter 115 reports the traces which are collected and stored at the Trace Collector node 131 of server 130. Similarly, the Rosbag reporter 119, Logs recorder 122 reports the Rosbag and Logs respectively which is collected at the server end by Rosbag collector node 134 and Log collector node 137 respectively. The Rosbag and Logs are stored at the server end and are always available for analysis by the system 100.

In one embodiment, the Rosbag recorder 119 and Logs recorder 122 increases the capability of the system to generate targeted information and enhance debugging experience. For debugging, consider a scenario where a robot route trace request has some error and the user may be interested in only downloading the rosbag and logs concerned with the request. The UI module 141 provides the download option via which a user can download the rosbag and/or logs. The server 130 provides a server node - Intelligent filtering module 140 that communicates with UI module 141. For a given trace data or targeted information, the Intelligent filtering module 140 allows a user to select a time window for retrieving logs in the input time range. From a contextual perspective, module 140 may allow a user to download all the rosbags and logs for a trace that may have involvement from multiple robots, servers, processes, different machines within the system. Further, module 140 may allow the system to classify the different logs and rosbags to identify which trace reports to which machine and for what time duration. After the identification process, module 140 automatically downloads the logs and rosbags. For example, if there are 3 robots, the UI module 141 due to Intelligent filtering module 140, may automatically enable the user to download 3 rosbag files for 3 different robots, servers, etc. for a different duration. Similarly, the UI module 141 with control of Intelligent filtering module 140, may perform similar functionality for logs. In existing systems, there is no way if an error related to the robot's routing process happens, the user cannot use the relevant rosbags or logs for debugging the errors that may occur on multiple robots. The present invention overcomes this problem and provides the user a rich debugging experience by providing a single dashboard for downloading the relevant rosbags and/or logs, etc. for the errors that occur while the robots are working in the operating environment.

In one embodiment, the target information may also include details of the robot, for example, machine ID, process name, hostname, etc. This information is available to the robot as part of the targeted information and also may be stored on the server for additional functionalities. The Intelligent filtering module 140 may use the hostname, identify and retrieve the relevant rosbag for the hostname, and filter the relevant information for the duration the trace was entered. The present invention is not limited to this example of filtering or utilization of rosbags for filtering the trace data. The server 130 provides different nodes where relevant data (e.g. rosbag/logs) and device context information (machine ID, hostname, process name, etc.) is collected and stored. The Intelligent filtering module 140 filters the relevant targeted information and provides the output to the user via UI module 130.

In one embodiment, the trace data has device context information which is also used in the Rosbags. This information is used to filter the appropriate Rosbags for the specific robot. The Rosbags maintain information on the timestamps, for example, at which time the data was collected, etc. The system has the relevant information, like timestamp (start time to end time), when the trace was active. The filtering module 140 can filter the relevant Rosbag data based on the timestamp and the device context information.

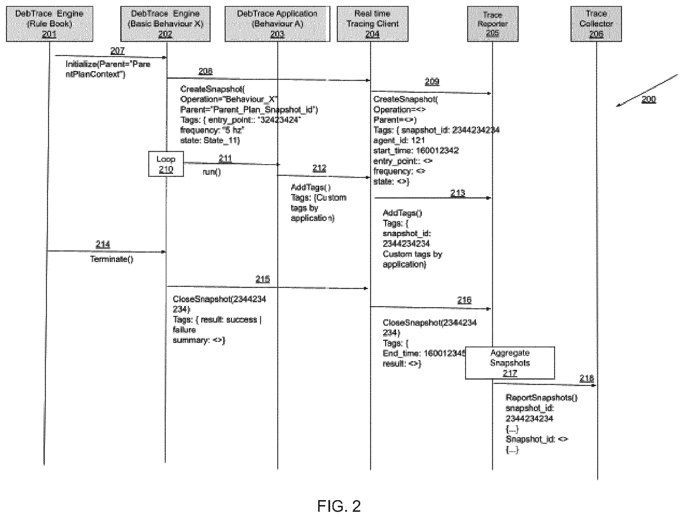

FIG. 2 is a flow diagram illustrating an exemplary process for generating and displaying targeted information related to the plurality of different types of mobile robots working in an operating environment, according to an embodiment. For simplicity and understanding purposes, the flow diagram is in the form of a sequence diagram that represents the process of creation, closing, and reporting of Snapshots. The process may be running on one or more nodes running on one or more robots or collaboratively between multiple robots and server nodes running on one or more servers. Consider a scenario where the system takes a decision to activate a robot behavior, for example, the Navigation of a robot in a warehouse. The DebTrace engine has a component called 'Rule Book' 201 which is triggered when there are changes in plans or when behavior is activated. The RuleBook 201 contains the operational rules of the system and periodically updates the plans according to the rules. The Basic Behavior X 202 is a component of the system, wherein X may be a 'Navigate' behavior, that may be responsible for navigating a robot in a warehouse. The system instantiates DebTrace Engine 201 and directs the DebTrace Engine 201 to run the parent plan of 'Navigate.' It is understood that the behaviors and plans are hierarchical in nature, for example, a tree structure, and hence, always has a parent. For example, for a mobile robot navigating in a warehouse, there may be a parent plan 'Task' that may have children, which are behaviors, for example, "ForkRise", "Navigation", "PickUp", "Drop", "MobileRackUnblock" etc. When the behavior instance gets instantiated 207, the system determines and reports the details of the parent for the respective behavior. Navigation behavior or plan may be related to different parents under different contexts, for example, the robot may be asked to navigate to a charge spot or navigate to pick/drop objects. So, depending on the contextual information, like parent context, the behavior of the robot may be different (either go to the charge spot or go to pick/drop objects.)

Initially, the DebTrace Engine 202 triggers an event ("CreateSnapshot") 208 which has parameters, like "Operation", "Parent", etc. The operation parameter indicates the behavior that was started. The system also treats a Snapshot as an event. Consider a "ParentPlanContext" as the parent for Behavior X. From the ParentPlanContext, the Rule Book module 201 creates a DebTrace Basic Behavior X instance 202. The DebTrace Engine 202 may then communicate 208 with a Real-time Tracing client module 204 that an event has been triggered. The metadata around the behaviors include, for example, answers for queries like what is the frequency, which state the robot is running in, what is the entry point? The key-value pair received by the Tracing client module 204 is left empty or is blank (e.g. Operation=<>, Parent=<>), so that the Tracing client module 204 may then populate the key-value pair with the related metadata. For example, the Tracing client 204 may add to the metadata of the Snapshot, a unique ID to Snapshot ID, agent_id may include the identifier of the agent reporting the details, start time of the event, etc. This populated information is shared 209 with the Trace Reporter module 205. The entities from DebTrace Engine 201 to Trace Reporter 205 may be considered as robot modules that are part of the System boundary level (shown as Process boundary in the robot 101) while the entity Trace Collector module 206 may be running as part of the back-end, DebTrace Server 119, which may be in the form of Cloud, beacons, edge server, etc. The UI module 123 may communicate with the Trace Collector 206 to collect the traces. So, at a high level, the process flow may begin with activation of one or behaviors, then, the metadata around the behaviors is shared with the Real-time tracing client, and the Behavior with updated metadata is reported to the Trace Reporter. The detailed, contextual, and/or targeted information may then be exposed to UI module 123 as per the system or end-user requirements.

In one embodiment, after a behavior is initiated, the DebTrace Engine 202 repeatedly calls the API run() 211 in a loop 210 for the application-level code, represented by the entity DebTrace Application 203. In the entire phase, the DebTrace Application 203 may add custom information by invoking 212 AddTags(). For example, the system may compute at least one or more parameters, for example, calculating the speed with which the robot is navigating and may add either max speed or minimum speed, any other metadata that the system is planning to capture, any other route that is going to be taken by the agent, etc. The system 200 enables the DebTrace Application module 203 to share large chunks of information, which are exported 213 to the Trace Reporter 205. The example tags that are added while exporting 213 data by invoking AddTags() include snapshot_id along with custom tags that are added by application 203. This process is repeated iteratively 210 until the DebTrace Engine terminates 214 the behavior, by invoking 215 CloseSnapshot(snapshot_id). After the termination 214, the DebTrace Engine 202 adds additional tags, for example, success or failure for the specific behavior, and reports 215 the information to Real-time Tracing client module 204. The Tracing client module 204 may then close 216 the Snapshot. The system may collect a set of such Snapshots and the aggregated Snapshots 217 are then reported 218 to the Trace Collector module 206.

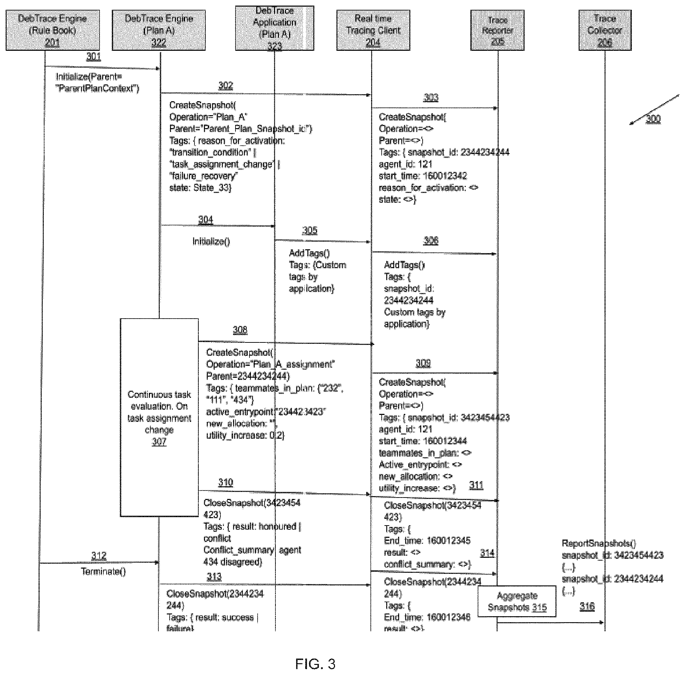

FIG. 3 is a flow diagram illustrating another exemplary process for generating and displaying targeted information related to the plurality of different types of mobile robots working in an operating environment, according to an embodiment. The DebTrace Engine component 'Rule Book' 201 initializes 301 and creates a Parent instance with the context set as "ParentPlanContext". The entity 'DebTrace Application' (Plan A) 323 inherits from DebTrace Engine (Plan A) 322. Consider Plan A as a plan instantiated under any other parent plan. The DebTrace Engine 322 then creates 302 a Snapshot by invoking CreateSnapshot() with a specific plan as an active plan, for example, Plan A. The other parameters of CreateSnapshot include the parent ID, tags that may include reasons for activation, etc. For example, the parameter - reasons for activation may include reasons like transition conditions that may hold true or being transitioned to a given state, or the plan may become active, or a task assignment change or the system is attempting a failure recovery, etc. The DebTrace Engine 322 adds the above information or any other relevant customized information as part of the metadata to the Snapshot.

In the sequence diagram, the Real time Tracing Client module 204 is shown creating 303 a Snapshot by invoking CreateSnapshot() with parameters as explained earlier. Once the plan is activated, the DebTrace Engine 322 calls the DebTrace Application (Plan A) 323 by invoking 304 Initialize(). The DebTrace Application may add 305 custom tags by AddTags() and the Real-time Tracing Client module 204 may populate 306 the tags with snapshot_id and other custom tags. While the agents are executing the plan, the agents are also continuously evaluating 307 task assignments so that the agents can perform the various tasks assigned to them. The DebTrace Engine 322 adds additional metadata that includes entry points in task mapping, utility functions for evaluating the desired frequency the user wants to diagnose, etc. As an example, consider there are 10 agents in the current plan A and 3 entry points to the current plan, then, the query for the system may be to provide details on which agent will be going into which entry point. This function is taken care of by the DebTrace Engine 322 by continuously evaluating 307 the task and whenever there is a task assignment change, the DebTrace Engine 322 creates 308 another Snapshot that says plan A has an assignment change. The parent parameter contains the snapshot_id of the parent to maintain the hierarchy of the Snapshots. The other relevant information may be related to the number of robots that were executing plan A along with the current robot, for example, the agents 232, 111, and 434 were also executing plan A when the task assignments changed. So, the agents are considered as teammates in the plan. In addition, as part of the active_entrypoint parameter, the data includes the active entry point to which the agent got assigned to. The next parameter may be the new_allocation which includes the agent who is working on a specific entry point. The forklift ID and the AGV ID is updated and the task details are updated in the task allocation-related field. The system also populates the gain achieved by the re-assignment, in the parameter utility_increase based on verification of the gain achieved due to the AGV assisting the forklift. The details related to these parameters will be explained with suitable non-limiting examples.

The flow from Real-time tracing Client module 204 to Trace Reporter module 205 in the sequence diagram is an example of simple reporting. The Real-time tracing client 204 populates 309 the relevant fields of the Snapshot, as part of reporting, with snapshot_id, agent_id, start_time, etc in the Tags field. The DebTrace Engine 322 sends a communication request 310 to close the Snapshot by invoking CloseSnapshot(). The Snapshot is closed when the task assignment is acknowledged with an update on the status of the task. For example, the status update may be whether the task was honored or whether there was a conflict. If there is a conflict, then, a summary is generated, for example, say among the teammates, agent 434 disagreed. In course of time, this status gets reported 311 by the Real-time tracing client module 204 to the Trace reporter module 205. At some stage during this process, the parent plan may get terminated 312 which leads to the invocation 313 of CloseSnapshot(), and a tag of either success or failure result is generated and populated in the said Snapshot. The parent Snapshot is then closed by the Real-time tracing client module and the Snapshots are aggregated 315. The aggregated Snapshots are then reported 316 by the Real-time reporter module 205 to the Real-time Trace Collector module 206.

In one embodiment, the system generates live targeted information as a diagnosis or solution for a fault or an error, or any activity that may have occurred in the operating environment. The DebTrace Engine 109 also outsources some of its functionality to other nodes like external tracing clients 113, 114, etc for generating a granular level of targeted information. Consider a scenario where there are 4 agents running on their respective forklifts that are executing a plan and then, at a particular point in time, the system decides that the forklifts need to switch places. Further, consider Forklift 1 is working on pallet 1001, Forklift 2 is working on pallet 2002, etc., and then the forklifts do the switch. Now, if the user wants to trace and debug either later or during live switching, the system generates and displays targeted information. When the switch happens, the system retrieves contextual information from the plurality of robots related to the operating activities on the warehouse floor, for example, an accounting of why the switch happened, what was the earlier assignment, new assignment, what was the gain, were there any conflicts, and other relevant information. For example, in a conflict scenario, it would be further relevant to have more granular information, like to know that one of the agents, for example, agent 434 disagreed. This information is targeted information for end-users to analyze and check what action was agent 434 performing. The system-reported targeted information may also indicate that agent 434 was not supposed to execute the specific plan. Based on this system-provided information, the diagnosis may be that the World Model information (stored in World model 105) may have not been as per the expectations. This kind of analysis is similar to a reverse analysis where the end-user receives targeted information instead of tons of data and based on the targeted information, the user may then decide if there is a need to analyze the tons of data.

In one embodiment, consider the UI module 123 displays an error for one of the 4 forklifts. The error message may be a "Navigation plan timeout" as included in the 'detail' parameter and hence, the forklift couldn't navigate. The metadata includes other details like which system component reported the error (e.g. Distributed task allocation 110). the error code (e.g. 643), agent_id (e.g. 1001), the action that was taken in response (e.g. 1) to the error for example, "Retry" or "Abort". In addition, the other information includes map_id which indicates the map of the warehouse, where the robot was operating. All this information is targeted information for the end-user instead of sharing irrelevant tons of data. Further, the information also includes contextual information, for example, specific information like the Navigation plan under 'Task' instead of just saying that it was an error. This parent-child hierarchy relationship is maintained which brings all the contextual information while diagnosing the error. However, if the error information had been only about 'Navigation plan timeout', the user may not get the necessary context like what was the robot doing in the specific zone or portion of the warehouse. With the UI module 123, the system may provide the end-user with detailed contextual information. The UI module may be designed to include various interfaces like panes, visual representations like heat maps, drop boxes that may include relevant fields, menus to select various functionalities for example debugger, recommender, tracer, plugins, libraries, rosbags, etc. The visual interface may provide information related to Task when the user clicks the collapsable arrow related to Task. On clicking the arrow, the Task-related information is revealed. For example, the snapshot_id provides details of the Snapshot being performed by the agent, map_id provides map-specific information, result parameter provides detail related to the result of the Snapshot. The Snapshot information further includes the type of Snapshot, denoted by the 'type' parameter, and the destination where the agent was asked to navigate to. All this relevant information is provided organically by the system without any inputs from the application or from the designers.

In one unclaimed embodiment, the system provides a heat map of tasks for a visual representation of trace data. The radius of the circle indicates the time taken by the agent to execute the task. A larger circle means more time taken by the agent to execute the task. The Y-axis of the heat map may represent the duration while X-axis may represent the timeline. The UI module 123 also provides the user an option to select the tasks and analyze the details of the tasks. In addition, the user can also narrow or filter to a specific task, for example, "Pickup" and the user may input a search query to identify the locations where most of the palette pickups have been completed by the robots. On clicking the task "Pickup", the UI displays metadata related to the task "Pickup". The visual interface may also include specific information, for example, the location in the operating environment where the palette pickup may have taken place.

In one embodiment, the system may be used for bottleneck identification, real-time or live debugging, actions to be taken to identify the context related to the error. The system answers the critical information to an end-user regarding when an error can occur, where the error occurred, why the error occurred, and details related to the error? The system is robust to provide recommendations to an end-user related to diagnosing an error or fault and for optimizing the system to improve productivity.

In one embodiment, the system enables the integration of multiple modules to provide a rich experience for the user to diagnose an error in real-time. Consider a scenario where a task is reported, that started at a certain time, 10.30 am on Jan 12, 2021, and finished after a certain interval of time 11.25 on Jan 13, 2021. The user may be interested in analyzing the rosbag during the specified interval. So, the system allows a user to select the time interval, for example, when an error was reported. The user can then use the heat-map interface and select a particular task. After selecting the task, the system displays the errors that may have occurred. After receiving the user selection, the system integrates the rosbag collection and presents a debug interface. The user is allowed to download Logs, Rosbags, and other relevant information, as required to diagnose the error in real-time. In one embodiment, the system provides a complete single dashboard where the user need not use any other modules to pull relevant information as they are available to the user in the same interface where the other events are reported. The modules may be related to rosbags, other logs that provide APIs which may be used by the UI to extract the relevant information as requested by the user.

In one embodiment, consider a team of forklift and AGVs working together to move a pallet. If an AGV is available, then the forklift picks and places the pallet onto the AGV and the AGV goes to its destination. At the destination, another forklift meets the AGV and unloads the pallet. However, if no AGV is available in the team, then the forklift has to perform all the AGV tasks, the forklift may go and drop the pallet to its destination. This application has multiple aspects, Task allocation relating to which robot does which activity, and behavior coordination relating to when the AGVs and forklifts are close to each other, then, both the robots need to collaborate so that if required, the forklift can pick and drop items onto the AGVs. The behavior coordination module 111 deals with the AGVs maintaining a certain distance threshold with the forklift so that the forklift can function with the AGV for picking and dropping items onto the AGV. A plantype includes a list of plans. The Task assignment and utility functions help the system decide which plan has to be executed.

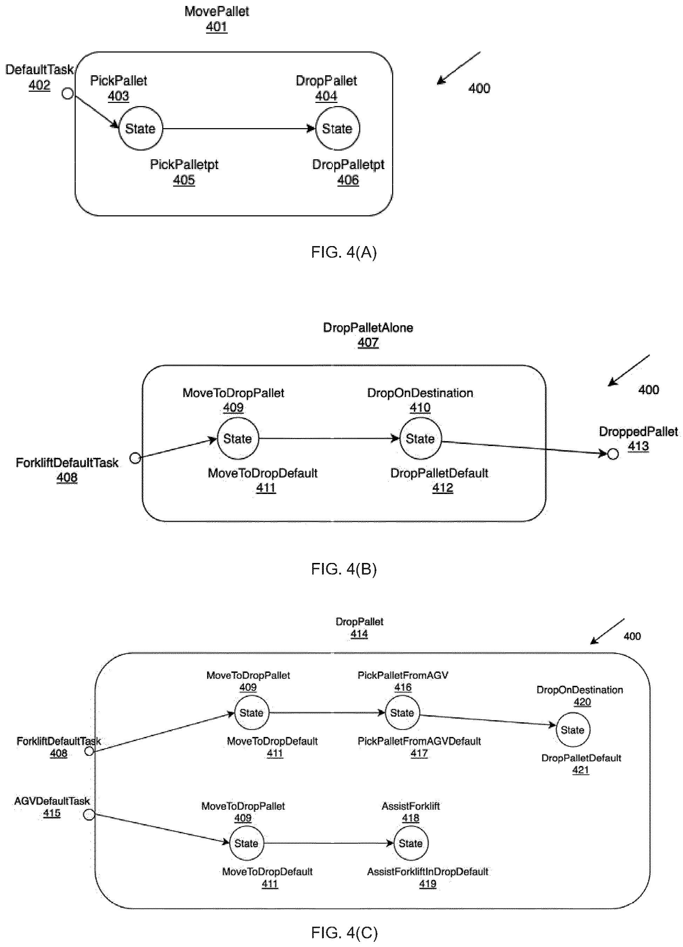

FIG. 4(A) is a state diagram illustrating another exemplary process for generating and displaying targeted information related to the plurality of different types of mobile robots working in an operating environment, according to an embodiment. A MovePallet plan 401 is shown with two states: PickPallet 403 and DropPallet 404. For simplicity and understanding purpose, consider the DropPallet state 404, where a forklift has successfully picked up the pallet and is now in the DropPallet state 404. Once the forklift is in the DropPallet state, the system activates the DropPalletpt plantype 406. When the system activates the DropPalletpt plantype 406, below Snapshot, is generated. Note the below details are non-limiting and are for representation and understanding purposes. The below Snapshot details may be further customized as per the application or the system requirements.

| |
|---|
| ```
 Operation="DropPalletpt"
 Parent="MovePallet_plan_snapshot_id")
 ActivatedInState=DropPallet
 Type=PlanType
 Tags: {
     reason_for_activation: "transition_condition"
     activation_summary: "PickPalletpt was successful"
    teammates_in_plan: {"121"}
     app_tag_pallet_id : "23487636547624"
     agent_id: 121
    snapshot_id: 2344234244
    start_time: 160012342
 }
``` |

In the said Snapshot, the Operation field indicates the plan type is DropPallet plan type 406, which is "DropPalletpt". The Parent field indicates the parent of the DropPallet plan type 406, which is the MovePallet plan 401. The ActivatedInState field indicates the state activated by the system when the Snapshot was created, which is the DropPallet state 404. The Type field denotes that the type is a PlanType instead of a plan or behavior. The other useful information is captured in the Tags field. The first field "reason_for_activation' gives insight on the reason for activating the DropPallet plan 404. The value for this field indicates that the forklift arrived at this state due to the "transition_condition." The next field 'activation_summary' denotes that the previous child, PickPallet 403 was successful, and hence, the forklift transitioned to the DropPallet state 404 after the successful transition from PickPalletpt 405. The next field "teammates_in_plan" indicates the ID of agents that are executing the current plan, which in this example is an agent with ID "121". The next field "app_tag_pallet_id" is a custom tag added by the application. When the system activates the plan, the application can add its own custom information. For example, for the said field, the pallet ID is added as custom information. It is understood that the previous field information is provided by the system, however, the field "app_tag_pallet_id" is provided by the application as additional information while debugging. This allows the system to be robust and flexible to be customized by application as per the needs of an end-user or a debugger. The other fields like agent_id, snapshot_id, and start_time are provided by the system as part of the Snapshot generation. It is understood that the procedure includes CreateSnapshot() and CloseSnapshot(). The CloseSnapshot() gives the result that includes details on the final state of the process, whether there was success or failure. When the CreateSnapshot() is executed, the start_time field is captured by the TracingClient, and when the CloseSnapshot() is executed, the end_time field may also be populated for the duration for which the Snapshot was active.

FIG. 4(B) is a state diagram illustrating another exemplary process for generating and displaying targeted information related to the plurality of different types of mobile robots working in an operating environment, according to an embodiment. The planType DropPalletpt 406 may comprise multiple plans, DropPalletAlone 407 and DropPallet 404. DropPalletAlone plantype 407 includes a forklift working alone on the task (moving pallet by itself) while DropPallet plantype 404 includes a forklift that has a collaboration with another robot, say an AGV that does the task of moving the pallets. As shown in the FIG. 4(B), there are two states shown for the DropPalletAlone planType 407, MoveToDropPallet 409 and DropOnDestination 410. This task is meant for forklift only which has to handle the pallet drop. When the system activates the DropPalletAlone plan 407, the below Snapshot is generated. The Parent field includes the name of the parent as "DropPalletpt_type_snapshot_id" and the ActivateInState is shown as Not applicable as the parent is still active here. The DropPalletAlone plan 407 is available in its parent state with Type as "Plan".

In the Tags field, the reason for activation is denoted as "task_evaluation" with the activation_summary field providing more contextual information that "Only forklift 121 is available to execute the plan." This is the reason for the system to choose DropPalletAlone state, as only one forklift 121 is available to execute the task of picking and dropping the pallet. This is further detailed in the next field where forklift with agent_id 121 is the only agent in the plan. The system fills the remaining fields like snapshot_id, agent_id, and start_time. This kind of non-limiting targeted information plays an important role for an end-user while debugging to fix failures or errors at run-time.

In one embodiment, while the forklift was executing the plan DropPalletAlone 407, consider a scenario where an AGV becomes available to assist the forklift. So, as soon as the AGV becomes free to help the forklift, the system triggers the closing of the Snapshot for the operation DropPalletAlone 407 and a new Snapshot is created for "DropPallet" with the updated reason for activation.

FIG. 4(C) is a state diagram illustrating another exemplary process for generating and displaying targeted information related to the plurality of different types of mobile robots working in an operating environment, according to an embodiment. As AGV is available to assist the forklift, the system module for task allocation may make both forklift and AGV execute the plan DropPallet 414. The previous plan DropPalletAlone 407 is closed by the system. The state machine shown in FIG. 4(C) is different from the one previously shown for "DropPalletAlone" (FIG. 4(B)). The forklift task has its own task machine (ForkliftDefaultTask 408) while the AGV task has its own task machine(AGVDefaultTask 415). So, initially, both the forklift and AGV move to drop the pallet (409). When AGV arrives at the drop point to assist the forklift 418, the forklift picks the pallet from AGV 416 that needs to be dropped at destination 420. This is represented in FIG. 4(C) with different states according to the functions executed by both forklift and AGV.

As shown in FIG. 4(C), the system activates DropPallet plan 414 and the parent remains the same as the DropPalletAlone 407. The significant change in the below Snapshot for DropPallet 414 and the previous Snapshot for DropPalletAlone 407 is the "activation_summary". In the current case, the activation summary indicates that both Forklift and AGVs (Forklift 121 and AGV 223) are executing the plan. The field "teammates_in_plan" indicates that multiple agents are available to execute the plan. For debugging purposes, the system relays this information to get relevant information on why the team including two agents are executing this plan compared to the other plans. The "teammates_in_plan" field gives information on all the team members who are executing plan 414. One of the other useful information is the allocation details in the field "new_allocation". For example, consider a team of 5 forklifts and 5 AGVs performing the tasks related to the pick and drop palette. The "new_allocation" provides the agent number and the specific task allocated to the agents. So, "121:ForkliftDefaultTask" indicates that out of all the teammates, who are collaborating on the various tasks - Forklift 121 is working on ForkliftDefaultTask 408. The field "new_allocation" is populated once the system triggers the task allocation module. The next field "utility_increase" gives useful information like the utility achievement due to the change made by introducing AGV along with the forklift. The system evaluates all the different task assignments on a scale of 1 to 10 and higher the value indicates better performance of the plan that was executed. The value indicates the gain achieved by the system due to the switch from a single forklift performing the tasks to having an AGV to assist the forklift. The remaining fields are the ones that are filled by the system as discussed in multiple non-limiting embodiments.

| |
|---|
| ```
 Operation="DropPallet"
 Parent="DropPalletpt_plan_type_snapshot_id")
 ActivatedInState=NA
 Type=Plan
 Tags: {
     reason_for_activation: "task_evaluation"
     activation_summary: "Forklift 121 and AGV 223 are available to execute plan"
    teammates_in_plan: {"121, 223"}
     active_entrypoint:"234423423"
     new_allocation: "121: ForkliftDefaultTask", "223: AGVDefaultTask",
     utility_increase: 0.5
    snapshot_id: 2344234275
     agent_id: 121
    start_time: 160012353
 }
``` |

It is understood from the above examples and FIG. 4(A)-4(C), that in the DropPallet plan 414, the forklift may be executing the state machine linked with ForkliftDefaultTask 408, and similarly, AGV may be executing its one state machine linked with AGVDefaultTask 415. So, as shown in the state diagram, the system may activate for the forklift, different behaviors at different times, starting with MoveToDropPallet behavior 409, then PickPalletFromAGV 416, to DropOnDestination 420. Similarly, the system may activate for the AGV, different behaviors like MoveToDropPallet 409 and AssistForklift 418.

Both, the forklift and AGV, may report different Snapshots for their respective behavior execution. For example, when the forklift finishes the PickPalletFromAGV behavior 416, the Snapshot may look like as given below:

| |
|---|
| ```
 Operation="PickPalletFromAgv"
 Parent="DropPallet_plan_snapshot_id")
 ActivatedInState=PickPalletFromAgv
 Type=Behaviour
 Tags: {
     reason_for_activation: "transition_condition"
     activation_summary: "MoveToDropPallet was successful"
     app_tag_location : "12, 34, <theta>" // Custom tag added by DebTrace application
     app_tag_confidence : "95%" // confidence on how successful the pickup was
     result: success
    snapshot_id: 2344234275
     agent_id: 121
    start_time: 160012353
     end_time: 160012373
 }
``` |

In one embodiment, the type for the above Snapshot is "Behavior" with the reason for activation field as "transition_condition." The summary indicates that the previous behavior MoveToDropPallet 409 was successful and the forklift arrived to execute the next state PickPalletfromAGV 416. Note that there are multiple application-specific inputs that are relayed that may help in real-time debugging. For example, the location where the pallet was picked up from AGV represented by "app_tag_location" field, and the next field "app_tag_confidence" is filled to denote the result of the function, which is how successful the pallet pickup was. This is updated by the system based on various parameters like camera feed data, sensory inputs, etc. to make a decision whether the pallet is properly attached to the fork or not. The information in the "app_tag_confidence" is a confidence score relayed by the application so that it may be used later while debugging or for machine learning or other recommendation systems. The next field gives a measure of whether it was a successful operation or led to failure. The remaining fields are similar to other Snapshots like the start_time and end_time.

In one embodiment, the below code snippet represents the Snapshot for AGV when it completes the behavior AssistForklift 418, related to assisting the forklift. Similar to the previous Snapshot, most of the information is filled, an additional field may be "app_tag_distance_travelled_during_assistance". The field includes the information related to the scenario wherein the AGV is assisting the forklift in picking pallets - for example, targeted information like the distance traveled by the AGV to assist the forklift. The value of 1m, 23 degrees indicates that the AGV had to travel 1 m and rotate 23 degrees to align properly or to move around to assist the forklift. This is another example of information that the application may want to relay for debugging or for machine learning/recommendation systems.

| |
|---|
| ```
 Operation="AssistForklift"
 Parent="DropPallet_plan_snapshot_id")
 ActivatedInState=AssistForklift
``` |
| ```
 Type=Behaviour
 Tags: {
     reason_for_activation: "transition_condition"
     activation_summary: "MoveToDropPallet was successful"
     app_tag_location : "13, 34" // Custom tag added by DebTrace application
     app_tag_distance_travelled_during_assistance : "1m, 23 Degree"
     result: success
    snapshot_id: 2344234285
     agent_id: 223
    start_time: 160012353
     end_time: 160012373
 }
 Events: { // Continuous events updated with solver results.
     12sec: Agent 121 is 3 m away at (12,13), arriving within 2m at (12, 11.2),
    18 sec: Agent 121 orientation will be 23 degrees off at goal, aligning to a 90 degree
 }
``` |

In one embodiment, while the behavior related to AGV assisting the forklift is active, represented by AsistForklift behavior 418, the distributed solver module 112 of the system is triggered to provide solutions. Consider a scenario where the forklift is moving and picking the pallet from AGV (PickPalletFromAGV behavior 416.) The AGV may be expected to stay stationary when the pallet is being picked up, or the AGV may be expected to align appropriately to the forklift so that the forklift can pick the pallet accurately in case they are at weird angles to each other or the AGV is far away and the forklift is not in a position to pick up. In such situations, the distributed solver module 112 of the system is triggered. Considering the forklift's location and AGV's own location, the solver module may determine the optimal location where the forklift must arrive or whether it would be better for the AGV to stay at the current location. This is represented in the above block by the "Events" field. So, while the distributed solver module 112 is calculating, the system can add any number of "Events" fields to help an end-user in real-time debugging of the incidents or stories that may have happened during the interval of time. So, the system updates the Snapshot with continuous events with the results of the solver module. For example, agent 121 is 3m away at location(12, 13), so, as per the distributed solver module result, agent 121 is arriving within 2m at (12, 11.2). Similarly, another event may be that Agent 121's orientation maybe 23 degrees off at the goal, and the solver module results in the Agent 121 aligning to 90 degrees. These are non-limiting examples of the distributed solver module 112 that are logged as events that are captured at different time intervals say at 12 sec and 18 sec, rather than as separate Snapshots. Snapshots are logical units that have to run for a certain period of time and valid for a period of time and can have it's own metadata as shown in previous examples. Snapshots are a representation of operations, for example, AssistForklift 418. However, events happen quite frequently when an operation or a Snapshot is active. Events may include logs of incidents that need to be relayed or stored as useful information for debugging purposes.

In one embodiment, while creating snapshots, the system is not limited to fields and values, but may also include time-stamped events that may be captured during the working of the robot, for example, while the robot is navigating in the warehouse. The snapshots are not limited to specific metadata or format and may be customized depending on different scenarios encountered in an operating environment. The targeted information may be more granular and provide solutions to queries like what was being done within the environment of the warehouse when the snapshot was being captured, which checkpoint or which position in the warehouse was cleared, and what time, when the 'Navigation' behavior was being executed, etc. The system provides the granular targeted information based on the nodes running on one or more robots that work in collaboration and based on communication with the server nodes running on the servers. This targeted information may be visualized either based on a simple UI, command line, video encoder plugin, simulator interface, replay feature using a video, etc.

In one embodiment, the system includes additional metadata for capturing time-stamped events in addition to the snapshots. Consider that a trace is generated in a UI related to the routing of the robots in the warehouse for which the nodes running on the robot may receive metadata (for example, route_response). The route_response metadata may include detailed granular and contextual information:
For example, suppose the system has acquired a log at a 30 second period of time for a 2 minutes time interval while the navigation is active, the above log information may indicate that at 30s, a lock was acquired for an external device, say rack, sheet shutter, etc. At 45s, the fifth checkpoint in the route was cleared, and at 55s, a tenth checkpoint was cleared in the route. Thus, a time-stamped event at a high-level snapshot is captured. In the above table for 'AssistForklift' operation, the "Events" field is shown with similar log entries (e.g. 12 sec: Agent 121 is 3m away, etc.) that are updated. The system adds more granular information in the form of 'Events' metadata.

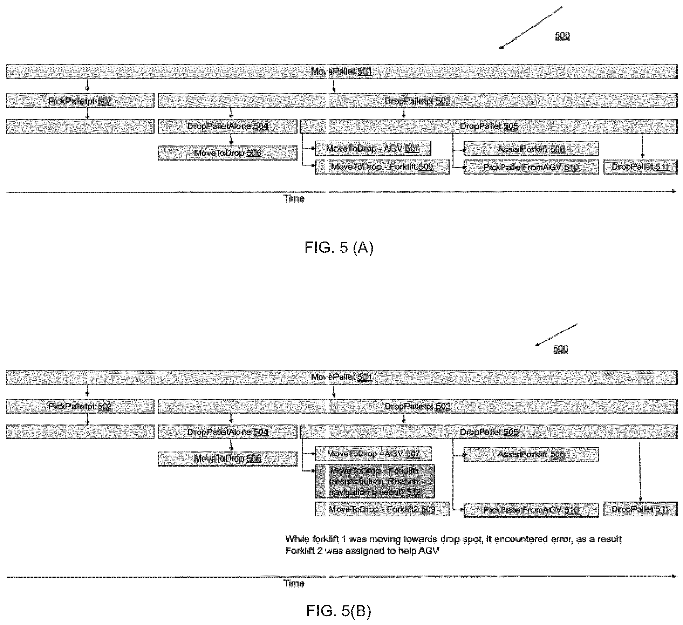

FIG. 5(A) is a trace visualization illustrating exemplary processes for generating and displaying targeted information related to the plurality of different types of mobile robots working in an operating environment, according to an embodiment. The trace visualization highlights the relations between different Snapshots. As an example, the "DropPallet" plan type is considered to maintain consistency with earlier embodiments. Each box is a representation of either Plan type, plan, or a behavior in execution.

In FIG. 5(A), the first box indicates that the "MovePallet" plan 501 is active. As an example, "DropPalletpt" plan type 503 is described in detail, for understanding and simplicity purposes. The arrows in the figure represent the parent-child relationship. The boxes at the same level indicate that they are siblings to each other as part of a tree-type hierarchy. While 'MovePallet' plan 501 is active, initially, the plan type 'PickPalletpt" 502 is first active as shown in the timeline as the pallet has to be picked first before dropping, this is then followed by "DropPalletpt" plan type 503 turning active. While the 'DropPalletpt" plan type is active, the "DropPalletAlone" 504 is first executed and as the forklift is moving to the drop location, the system terminates the task and invokes the "DropPallet" plan 505 if there is an AGV available to assist the forklift. When the "DropPallet" plan 505 is activated, this brings the scenario where there are two agents, a Forklift and an AGV, which is available. So, there are two behaviors "MoveToDrop" for AGV 507 and "MoveToDrop" for Forklift 509, that are considered, both being children of the parent, "DropPallet" 505. The behavior for AGV and for the Forklift may have different Snapshot and different duration ("'MoveToDrop" Forklift box 509 is longer in timeline compared to "MoveToDrop" AGV 507) because the agents AGV and Forklift may be at their own position and may take their own time to drop the pallet. However, "AssistForklift" 508 and "PickPalletFromAGV" 510 behaviors start at the same time. So, as shown in the diagram, the AGV may be sitting idle or waiting for the Forklift to complete the behavior "MoveToDrop" 509, and then starts assisting the Forklift 508. The Forklift also then starts picking pallets from AGV 510 once the AGV assists the Forklift 508. As the AGV actions are completed, the Forklift goes on to do the next action related to "DropPallet" 511.

In one embodiment, the user may click on any of the Snapshots and get details of the metadata. Now, consider that the "MoveToDrop" plan 506 was active, which means the Navigation plan was active, as all these behaviors are part of the Navigation plan. In the UI, the user can click on the Navigation plan to drop down a list of checkpoints, nodes, locations, etc. These are the various points or places in the warehouse where the robot has to travel to arrive at the drop location while executing the "MoveToDrop" plan 506. The user can select any of the list items to debug. In addition, the user can also click on a specific plan, for example, "MoveToDrop" plan 506, the snap details will be visually displayed with information like the path taken by the Forklift, route that was planned to cover, or route assigned to the Forklift, along with the timestamp, nodes, checkpoints, and other granular levels of details that may be displayed to the user to fix issues while debugging. The user may also get a visual representation, for example, a map of the entire path taken by the Forklift on clicking the "MoveToDrop" plan. The route that was taken by the forklift may be shown on the map, for example, the user can select a time-window, for example, 11th March-23:00 to 12th March-02:00 hours, and trigger a query, say what was a specific forklift, say agent 123, doing within the given time-window. The user can fire such custom queries and the system, on receiving these queries, may trigger various system modules to give a visual representation to the user to enable debugging utilities. Another form of the query may be in a key: value form and the user may be able to visualize what the agent (forklift, AGV, arm, AMR, other types of robots, etc.) was doing at the specific instant of time. Once the queries are fired, the relevant Snapshots may pop out. For example, for the Snapshot related to "PickPalletFromAgv" 510, the query may be at which location, the pallet was picked, or for 'DropPallet' 505, Snapshot, at which location was the pallet dropped. The user may be provided either a list of Snapshots or can fire custom queries which will enable the user to fix the issues while debugging and/or tracing or measure performance gain related to the assistance of AGV to the forklift.

In one embodiment, in addition to the rosbag module that may be plugged into the system, the system also allows a logs module to be integrated so that logs can be collected and the system may provide the targeted information desired by the user related to the logs. The modules like rosbag, logs, etc. give a rich debug experience to the end-user to obtain targeted information.

In one unclaimed embodiment, the system provides an intelligent filtering module as part of the system. The intelligent filtering module allows a user to filter the events related to targeted information not just restricted to time, but considering other factors also. The factors may be agents that a user (e.g. robotics developer) is interested in, a spatial area in the operating environment where the user (e.g. warehouse manager) may be focussed on, etc.

In one unclaimed embodiment, the system provides a 'replay' feature that includes a visualizer module that allows a user to play a video to trace the action done by each agent at any specific time. The user can jump in the entire event at any point in time and provide a visualization interface. The visualization interface may be used to play a video or utilize a simulation interface to visualize the targeted information at a given interval of time, e.g. Look at the status of the warehouse between 9 pm-6 am.

In one unclaimed embodiment, the system may also invoke a UI, for example, a heat map, in which, the user may select the 'DropPallet' Snapshot, and then, the system displays the drop location. The user can then click on the drop location or provide input in any other form (e.g. right-click) and view the heat map. The system displays the entire warehouse map and provides customized information like recent drop locations, frequent drop locations, or drop locations having some pattern, or drop locations on a given day, or drop locations near a particular zone of the warehouse, etc. Similarly, the system may customize and display different combinations of results in case the query is related to 'pick locations.' Other examples may be where users may select a 'Navigation' plan. As the 'Navigation' plan in itself is huge and complex, there may be more customized search queries with preconditions, like:
Display the checkpoints where each robot was waiting; or Display the checkpoints where a specific robot (say agent 121) was waiting for other robots to pass, etc.
Based on the search query, the system may generate a heat map that may be visually displayed. **In** the heat map, the user may observe that there is a specific critical junction (e.g. Zone 0 aisle 1), where the robots are waiting for each other.

These are the sort of non-limiting examples that indicate the robustness of the system to allow a user to retrieve a granular level of information in a visual or command line representation. Such information may be useful for a user to make business and/or solution-centric decisions for improving performance and enabling cost savings. This visual representation may also be customized as per the user's needs by importing a plugin that allows different representations that may be stacked up or displayed within a simulated map that causes the user to get a real-world experience of the operating environment of the robots while debugging. The live traced data may be used by the user to improve the warehouse layout conditions, configure robot design parameters, provide solutions to complex collaboration scenarios for system integrators, observe patterns in the behavior of robots and improve the performance based on historical data, etc.

FIG. 5(B) is a trace visualization illustrating an exemplary process for generating and displaying targeted information related to the plurality of different types of mobile robots working in an operating environment, according to an embodiment. Consider a scenario where a forklift (say forklift1) or AGV has not performed the given task. In the figure, the different events happen as per the below timeline: During debugging, the user may not only be interested in knowing the faulting robot but also, the contextual information under which such an error occurred. If the forklift1 and AGV are collaborating, then the behavior "MoveToDrop" may be executed by both the robots together wherein the AGV moves to drop the pallet while the forklift1 has to pick the pallet from the AGV. Now, consider a scenario: when the "MoveToDrop" behavior of the forklift1 is active, the forklift1 may encounter an error, for example, Navigation plan timeout or Navigation plan taking too long. In such a scenario, the Snapshot for "MoveToDrop" behavior for the forklift1 may include that the result field has value "failure" 512. The system module, DebTrace engine, may attempt to repair the plan due to which the failure occurred. The robot ID and task details of both the robots for the task allocation field are updated. In response to the update, during the repairing process, the system may verify that an AGV is available but the forklift1 may not be available. So, the first check for the system may be to go through the list of forklifts that are available and determine whether a forklift 2 can be utilized rather than relying on the erred forklift 1. The DebTrace engine may then re-trigger the plan "MoveToDrop " with a different forklift 2 if the forklift 2 is available (highlighted in the figure). While tracing, the user may find that the behavior "MoveToDrop" of the AGV 507 may be active along with the "MoveToDrop" behavior of forklift 1. Later, if forklift 1 encountered any error, and now, the "MoveToDrop " behavior for a different forklift (say forklift 2) 509 is active. The system may enable a visual representation for the user that the "MoveToDropPallet" behavior failed, leading to a task allocation change, and hence, a new forklift joining in to help the AGV to complete.

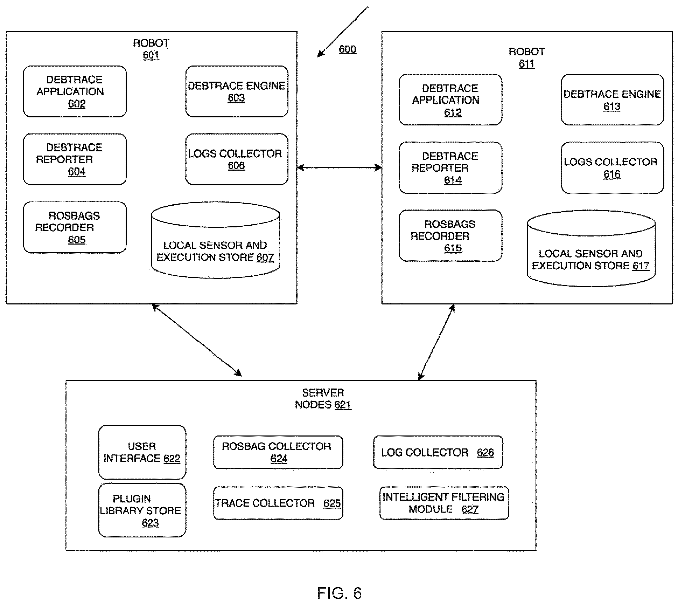

FIG. 6 is a system diagram illustrating an exemplary system for generating and displaying targeted information, according to an embodiment. The system 600 comprises a plurality of robots working in the operating environment. For simplicity purposes, only two robots, 601 and 611 are shown. Each robot (for example, robot 601) includes nodes, for example, DebTrace application 602, DebTrace Engine 603, DebTrace reporter 604, local sensor and execution store to store data values captured by the robot sensors and processed by the robot during different states of the robot (idle, ready, wait, active, suspended, terminated, etc.) Each robot has a processor to execute instructions and storage to store the instructions. Each robot communicates with each other and collaborates during their navigation journey in the warehouse. The plurality of robots is also in communication with server nodes 621, which includes a User interface (UI) module 622, DebTrace collector module 625, a plugin library store 623, rosbag collector node 624, log collector node 626, intelligent filtering module 627. A visual interface is provided via the UI module 622 to allow the user to import libraries and/or plugins to improve the capabilities of the system 600 for including additional features like repairing the system in case of fault or errors, recommending an optimal solution to improve productivity, utilizing machine learning models to learn, train the system to identify patterns, and improve the system, etc. The nodes may be a library or APIs or daemons or scripts, or software modules that may run on one or more computing systems having one or more processors to execute the nodes. The nodes may include inter-communication processes to interact with each other to achieve the functionality of the computing system. The system 600 also allows a user to input customized search queries to fetch targeted information to achieve the objective of the present invention. The system 600 utilizes the server node, UI module 622 to provide the results.

The embodiment disclosed herein specifies methods and systems for generating and displaying targeted information related to navigation of a plurality of robots in an operating environment. Therefore, it is understood that the scope of the protection is extended to such a program and in addition to a computer-readable means having a message therein, such computer-readable storage means contain program code means for implementation of one or more steps of the method when the program runs on a server or mobile device or any suitable programmable device. In one embodiment, the nodes running on one robot may distribute the functionality with the nodes running on other robots and/or may collaborate between them and/or with the server nodes to implement the functionalities and embodiments described herein. The nodes running on the devices is implemented in at least one embodiment through or together with a software program written in e.g. Very high speed integrated circuit Hardware Description Language (VHDL) another programming language, or implemented by one or more VHDL or several software modules being executed on at least one hardware device. The hardware device can be any kind of device which can be programmed including e.g. any kind of computers like a server or a personal computer, or the like, or any combination thereof, e.g. one processor and two FPGAs. The device may also include means which could be e.g. hardware means like e.g. an ASIC or a combination of hardware and software means, e.g. an ASIC and an FPGA, or at least one microprocessor and at least one memory with software modules located therein. Thus, the means are at least one hardware means and/or at least one software means. The method embodiments described herein could be implemented in pure hardware or partly in hardware and partly in software. The device may also include only software means. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of embodiments and examples, those skilled in the art will recognize that the embodiments herein can be practiced with modification within the spirit and scope of the claims as described herein. software program written in e.g. Very high speed integrated circuit Hardware Description Language (VHDL) another programming language, or implemented by one or more VHDL or several software modules being executed on at least one hardware device. The hardware device can be any kind of device which can be programmed including e.g. any kind of computers like a server or a personal computer, or the like, or any combination thereof, e.g. one processor and two FPGAs. The device may also include means which could be e.g. hardware means like e.g. an ASIC or a combination of hardware and software means, e.g. an ASIC and an FPGA, or at least one microprocessor and at least one memory with software modules located therein. Thus, the means are at least one hardware means and/or at least one software means. The method embodiments described herein could be implemented in pure hardware or partly in hardware and partly in software. The device may also include only software means. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning of the disclosed embodiments. Therefore, while the embodiments herein have been described in terms of embodiments and examples, those skilled in the art will recognize that the embodiments herein can be practiced with modification within the scope of the claims as described herein.

## Claims

1. A computer-implemented method for generating and reporting targeted information related to a plurality of robots working in an operating environment, the method comprising:
a node running on one or more robots (101, 102, 103) performing:
executing one or more behaviors, related to an active parent plan of the one or more robots (101, 102, 103) wherein a parent plan is a list of behaviors to be executed one after the other;
creating one or more snapshots related to an executing behavior, wherein a snapshot includes a plurality of fields wherein each field is assigned a value;
capturing information based on a parent context related to the executing behavior, wherein the parent context includes parent information of the active parent plan of the one or more robots (101, 102, 103);
populating the plurality of fields of the one or more snapshots with values related to the captured information, operating environment, and the one or more robots (101, 102, 103);
closing the one or more snapshots with a result of the executing behaviors; and
a reporter node running on the one or more robots (101, 102, 103) performing:
aggregating the closed snapshots and reporting the aggregated snapshots as part of the targeted information for displaying and debugging the targeted information.

2. The computer-implemented method according to claim 1, wherein populating the plurality of fields of the one or more snapshots comprising:
the node running on the one or more robots (101, 102, 103), adding metadata including active entry points assigned to agents running on the plurality of robots, utility functions, robots executing the plan, switching between robots, conflicts, and gain to the relevant fields of the one or more snapshots;
and
providing a diagnosis based on the targeted information.

3. The computer-implemented method according to claim 1, wherein reporting targeted information comprising:
the node running on the one or more robots (101, 102, 103), evaluating tasks assigned to the plurality of robots while executing the one or more behaviors;
in response to evaluating tasks, determining the time spent in executing one or more behaviors in context of the evaluated tasks;
receiving a query regarding at least one or more of the time taken to execute evaluated tasks and the determined time spent in executing one or more behaviors;
and
the reporter node running on one or more robots (101, 102, 103), reporting visually at least one or more of the time taken to execute the evaluated tasks and the determined time spent in executing one or more behaviors, wherein the visual reporting includes a shape, wherein the size of the shape indicates at least one or more of the time taken to execute the evaluated tasks and the determined time spent in executing one or more behaviors.

4. The computer-implemented method according to claim 1, wherein the targeted information comprising contextual information related to switching of the behaviors between the one or more robots, wherein the contextual information includes at least one of, a reason for switch, earlier behaviors associated with the one or more robots before switching, current behaviors associated with the one or more robots after switching, conflict information regarding executing the switch by at least one robot of the one or more robots, and information regarding disagreement for executing switch behaviors.

5. The computer-implemented method according to claim 1, wherein the plurality of fields comprises at least one of, a state activation field, a plan type, a transition condition, activation summary, and teammates plan.

6. A system for generating and displaying targeted information, the system comprising:
a plurality of robots (101, 102, 103) working in an operating environment, wherein each robot includes a processor to execute instructions and a memory to store the instructions; a plurality of server nodes running on one or more servers (130); a plurality of nodes executing at the plurality of robots in communication with the plurality of server nodes include:
executing one or more behaviors, related to an active parent plan, of the plurality of robots working in the operating environment, wherein a parent plan is a list of behaviors to be executed one after the other;
creating one or more snapshots related to an executing behavior, wherein a snapshot includes a plurality of fields wherein each field is assigned a value;
capturing information based on a parent context related to the executing behavior, wherein the parent context includes parent information of the active parent plan;
populating the plurality of fields of the one or more snapshots with values related to the captured information, operating environment, and one or more robots;
closing the one or more snapshots with a result of the executing behaviors; aggregating the closed snapshots and reporting the aggregated snapshots as part of the targeted information; and
displaying and debugging the targeted information related to the plurality of robots working in the operating environment.

7. The system according to claim 6,
further comprising:
receiving input that a second robot is available to assist a first robot from the plurality of robots (101, 102, 103);
closing a snapshot related to the behavior being executed by the first robot in response to the received input; and
creating a new snapshot related to at least one or more of plan, behavior, and plantype being executed by the first robot in assistance with the second robot, wherein a plantype includes a list of plans.

8. The system according to claim 7,
further comprising:
populating summary information related field with a value that the first and the second robots are executing the behavior;
updating robot ID and task details of both the robots for the task allocation related field;
in response to updating the robot ID and task details, verifying gain achieved due to the second robot assisting the first robot; and
in response to the verification, populating a gain related field to a value indicating the performance of the execution of the behavior.

9. The system according to claim 7,
further comprising:
creating additional snapshot related to at least one or more of plan, behavior, and plantype being executed by the second robot; and
aggregating the created snapshot and reporting the aggregated snapshot.

10. The system according to claim 7,
further comprising:
populating location of the first and second robot and task related information in the related fields of the new snapshot;
determining a confidence score as a value for a field related to the result of the execution of a behavior, wherein the confidence score is represented by a scale indicating success or failure; and
aggregating the new snapshot and reporting the aggregated snapshot as part of the targeted information.

11. The system according to claim 7,
further comprising:
capturing distance traveled and orientation of the second robot assisting the first robot; and
in response to the capturing, verifying that the orientation and the distance traveled of the second robot enabled proper alignment with the first robot before populating the fields of the new snapshot; and optionally
further comprising:
receiving a query related to real-time debugging of assistance of the second robot to the first robot; and
reporting live events captured while the second robot assisted the first robot.

12. The system according to claim 6,
further comprising:
receiving inputs related to at least one of a behavior, a plan, and a plantype executed by the plurality of robots (101, 102, 103) within a subset of a time-window, wherein the time-window comprises the time spent by the plurality of robots (101, 102, 103) working in the operating environment, wherein a plantype includes a list of plans; and
reporting values of fields of the aggregated snapshots as part of the targeted information within the subset of the time-window and related to the at least one of behavior, plan, and plantype executed by the robots.

13. The system according to claim 7,
further comprising:
receiving an error related to the assistance of the second robot to the first robot;
identifying the faulting robot based on the values in the aggregated snapshot, wherein the second robot is the faulting robot;
automatically initiating a repairing process to verify if another robot is available to assist the first robot; and
based on availability, retriggering at least one or more of plan, behavior, and plantype being executed by the another robot.

14. A non-transitory computer-readable storage medium having instructions stored thereon, which when executed by the system of any of claims 6-13, cause the system to perform the method of any one of claims 1 to 5.

## Patentansprüche

1. Computerimplementiertes Verfahren zum Erzeugen und Melden gezielter Informationen in Zusammenhang mit einer Vielzahl von in einer Betriebsumgebung arbeitenden Robotern, das Verfahren Folgendes umfassend:
einen Knoten, der auf einem oder mehreren Robotern (101, 102, 103) läuft und Folgendes durchführt:
Ausführen einer oder mehrerer Verhaltensweisen in Zusammenhang mit einem aktiven übergeordneten Plan des einen oder der mehreren Roboter (101, 102, 103), wobei ein übergeordneter Plan eine Liste von Verhaltensweisen ist, die nacheinander ausgeführt werden sollen;
Erstellen eines oder mehrerer Snapshots in Zusammenhang mit einem Ausführungsverhalten, wobei ein Snapshot eine Vielzahl von Feldern einschließt, wobei jedem Feld ein Wert zugewiesen ist;
Erfassen von Informationen basierend auf einem übergeordneten Kontext in Zusammenhang mit dem Ausführungsverhalten, wobei der übergeordnete Kontext übergeordnete Informationen des aktiven übergeordneten Plans des einen oder der mehreren Roboter (101, 102, 103) einschließt;
Füllen der Vielzahl von Feldern des einen oder der mehreren Snapshots mit Werten in Zusammenhang mit den erfassten Informationen, der Betriebsumgebung und dem einen oder den mehreren Robotern (101, 102, 103);
Schließen des einen oder der mehreren Snapshots mit einem Ergebnis des Ausführungsverhaltens; und
einen Meldeknoten, der auf dem einem oder den mehreren Robotern (101, 102, 103) läuft und Folgendes durchführt:
Aggregieren der geschlossenen Snapshots und Melden der aggregierten Snapshots als Teil der gezielten Informationen zum Anzeigen und Debuggen der gezielten Informationen.

2. Computerimplementiertes Verfahren nach Anspruch 1, wobei das Füllen der Vielzahl von Feldern des einen oder der mehreren Snapshots Folgendes umfasst:
der Knoten, der auf dem einem oder den mehreren Robotern (101, 102, 103) läuft, fügt Metadaten einschließlich aktiven Einstiegspunkten, die Agenten, die auf der Vielzahl von Robotern laufen, zugewiesen sind, Hilfsfunktionen, Robotern, die den Plan ausführen, Wechseln zwischen Robotern, Konflikten und Vorteile für die entsprechenden Felder des einen oder der mehreren Snapshots hinzu;
und
Bereitstellen einer Diagnose basierend auf den gezielten Informationen.

3. Computerimplementiertes Verfahren nach Anspruch 1, wobei das Melden von gezielten Informationen Folgendes umfasst:
der Knoten, der auf dem einem oder den mehreren Robotern (101, 102, 103) läuft, wertet Aufgaben aus, die der Vielzahl von Robotern zugewiesen sind, während die eine oder die mehreren Verhaltensweisen ausgeführt werden;
als Reaktion auf das Auswerten von Aufgaben, Bestimmen der Zeit, die aufgewendet wird, um eine oder mehrere Verhaltensweisen in dem Kontext der ausgewerteten Aufgaben auszuführen;
Empfangen einer Anfrage bezüglich mindestens einer oder mehrerer von der Zeit, die benötigt wird, um ausgewertete Aufgaben auszuführen und der bestimmten Zeit, die beim Ausführen einer oder mehrerer Verhaltensweisen aufgewendet wird;
und
der Meldeknoten, der auf einem oder mehreren Robotern (101, 102, 103) läuft, meldet visuell mindestens eine oder mehrere von der Zeit, die benötigt wird, um die ausgewerteten Aufgaben auszuführen, und der bestimmten Zeit, die aufgewendet wird, um eine oder mehrere Verhaltensweisen auszuführen, wobei das visuelle Melden eine Form einschließt, wobei die Größe der Form mindestens eine oder mehrere von der Zeit, die benötigt wird, um die ausgewerteten Aufgaben auszuführen, und der bestimmten Zeit, die aufgewendet wird, um eine oder mehrere Verhaltensweisen auszuführen, einschließt.

4. Computerimplementiertes Verfahren nach Anspruch 1, wobei die gezielten Informationen Kontextinformationen in Zusammenhang mit einem Wechseln der Verhaltensweisen zwischen dem einen oder den mehreren Robotern umfassen, wobei die Kontextinformationen mindestens eines von einem Grund zum Wechsel, früheren Verhaltensweisen des einen oder der mehreren Roboter vor dem Wechseln, aktuellen Verhaltensweisen des einen oder der mehreren Roboter nach dem Wechseln, Konfliktinformationen bezüglich der Ausführung des Wechsels durch mindestens einen Roboter des einen oder der mehreren Roboter und Informationen über Uneinigkeiten bei der Ausführung des Wechselverhaltens einschließt.

5. Computerimplementiertes Verfahren nach Anspruch 1, wobei die Vielzahl von Feldern mindestens eines von einem Zustandsaktivierungsfeld, einer Planungsart, einer Übergangsbedingung, einer Aktivierungszusammenfassung und einem Teammitgliederplan umfasst.

6. System zum Erzeugen und Anzeigen zielgerichteter Informationen, wobei das System Folgendes umfasst:
eine Vielzahl von Robotern (101, 102, 103), die in einer Betriebsumgebung arbeiten, wobei jeder Roboter einen Prozessor, um Anweisungen auszuführen und einen Speicher, um die Anweisungen zu speichern, einschließt; eine Vielzahl von Serverknoten, die auf einem oder mehreren Servern (130) laufen;
eine Vielzahl von Knoten, die auf der Vielzahl von Robotern ausgeführt werden in Kommunikation mit der Vielzahl von Serverknoten, einschließlich:
Ausführen einer oder mehrerer Verhaltensweisen in Zusammenhang mit einem aktiven übergeordneten Plan der Vielzahl von in der Betriebsumgebung arbeitenden Roboter, wobei ein übergeordneter Plan eine Liste von Verhaltensweisen ist, die nacheinander ausgeführt werden sollen;
Erstellen eines oder mehrerer Snapshots in Zusammenhang mit einem Ausführungsverhalten, wobei ein Snapshot eine Vielzahl von Feldern einschließt, wobei jedem Feld ein Wert zugewiesen ist;
Erfassen von Informationen basierend auf einem übergeordneten Kontext in Zusammenhang mit dem Ausführungsverhalten, wobei der übergeordnete Kontext übergeordnete Informationen des aktiven übergeordneten Plans einschließt;
Füllen der Vielzahl von Feldern des einen oder der mehreren Snapshots mit Werten in Zusammenhang mit den erfassten Informationen, der Betriebsumgebung und einem oder mehreren Robotern;
Schließen des einen oder der mehreren Snapshots mit einem Ergebnis des Ausführungsverhaltens;
Aggregieren der geschlossenen Snapshots und Melden der aggregierten Snapshots als Teil der gezielten Informationen; und
Anzeigen und Debuggen der gezielten Informationen im Zusammenhang mit der Vielzahl von in der Betriebsumgebung arbeitenden Roboter.

7. System nach Anspruch 6, ferner umfassend:
Empfangen einer Eingabe, dass ein zweiter Roboter verfügbar ist, um einen ersten Roboter von der Vielzahl von Robotern (101, 102, 103) zu unterstützen;
Schließen eines Snapshots in Zusammenhang mit der durch den ersten Roboter als Reaktion auf die empfangene Eingabe ausgeführten Verhaltensweise; und
Erstellen eines neuen Snapshots in Zusammenhang mit mindestens einem oder mehreren von einem Plan, einer Verhaltensweise und einer Planungsart, ausgeführt durch den ersten Roboter mit Unterstützung des zweiten Roboters, wobei eine Planungsart eine Liste von Plänen einschließt.

8. System nach Anspruch 7, ferner umfassend:
Füllen eines Feldes in Zusammenhang mit zusammenfassenden Informationen mit einem Wert, dass der erste und der zweite Roboter die Verhaltensweise ausführen;
Aktualisieren einer Roboter-ID und Aufgabendetails beider Roboter für das Feld in Zusammenhang mit einer Aufgabenzuweisung;
als Reaktion auf das Aktualisieren der Roboter-ID und Aufgabendetails, Überprüfen eines erzielten Vorteils, dadurch dass der zweite Roboter den ersten Roboter unterstützt; und
als Reaktion auf das Überprüfen, Füllen eines Felds in Zusammenhang mit Vorteilen mit einem Wert, der die Leistung der Ausführung der Verhaltensweise angibt.

9. System nach Anspruch 7, ferner umfassend:
Erstellen zusätzlicher Snapshots in Zusammenhang mit mindestens einem oder mehreren von einem Plan, einer Verhaltensweise und einer Planungsart, ausgeführt durch den zweiten Roboter; und
Aggregieren des erstellten Snapshots und Melden des aggregierten Snapshots.

10. System nach Anspruch 7, ferner umfassend:
Füllen der Standorte des ersten und zweiten Roboters und aufgabenbezogener Informationen in die entsprechenden Felder des neuen Snapshots;
Bestimmen eines Konfidenzwertes als einen Wert für ein Feld im Zusammenhang mit dem Ergebnis der Ausführung einer Verhaltensweise, wobei der Konfidenzwert durch eine Skala dargestellt wird, die Erfolg oder Misserfolg anzeigt; und
Aggregieren des neuen Snapshots und Melden des aggregierten Snapshots als Teil der gezielten Informationen.

11. System nach Anspruch 7, ferner umfassend:
Erfassen einer zurückgelegten Strecke und Ausrichtung des zweiten Roboters, der den ersten Roboter unterstützt; und
als Reaktion auf das Erfassen, Überprüfen, dass die Ausrichtung und die zurückgelegte Strecke des zweiten Roboters eine korrekte Ausrichtung mit dem ersten Roboter ermöglichen, bevor die Felder des neuen Snapshots gefüllt werden; und optional
ferner umfassend:
Empfangen einer Anfrage im Zusammenhang mit Echtzeit-Debugging der Unterstützung des ersten Roboters durch den zweiten Roboter; und
Melden von Live-Ereignissen, die aufgezeichnet werden, während der zweite Roboter den ersten Roboter unterstützt.

12. System nach Anspruch 6, ferner umfassend:
Empfangen von Eingaben in Zusammenhang mit mindestens einem von einer Verhaltensweise, einem Plan oder einer Planungsart, ausgeführt durch die die Vielzahl von Robotern (101, 102, 103) innerhalb einer Teilmenge eines Zeitfensters, wobei das Zeitfenster die Zeit umfasst, die durch die Vielzahl von Robotern (101, 102, 103) in der Betriebsumgebung aufgebracht wird, wobei eine Planungsart eine Liste von Plänen einschließt; und
Melden von Werten von Feldern der aggregierten Snapshots als Teil der gezielten Informationen innerhalb der Teilmenge des Zeitfensters und in Zusammenhang mit dem mindestens einen von einer Verhaltensweise, einem Plan oder einer Planungsart, ausgeführt durch die Roboter.

13. System nach Anspruch 7, ferner umfassend:
Empfangen einer Fehlermeldung im Zusammenhang mit der Unterstützung des ersten Roboters durch den zweiten Roboter;
Identifizieren des fehlerhaften Roboters basierend auf den Werten in dem aggregierten Snapshot, wobei der zweite Roboter der fehlerhafte Roboter ist;
automatisches Einleiten eines Reparaturvorgangs, um zu überprüfen, ob ein weiterer Roboter verfügbar ist, um den ersten Roboter zu unterstützen; und
basierend auf Verfügbarkeit, erneutes Auslösen von mindestens einem oder mehreren von einem Plan, einer Verhaltensweise und einer Planungsart, ausgeführt durch einen anderen Roboter.

14. Nichtflüchtiges computerlesbares Speichermedium, auf dem Anweisungen gespeichert sind, die, wenn sie durch das System nach einem der Ansprüche 6 bis 13 ausgeführt werden, das System dazu veranlassen, das System nach einem der Ansprüche 1 bis 5 durchzuführen.

## Revendications

1. Procédé mis en œuvre par ordinateur pour générer et communiquer des informations ciblées relatives à une pluralité de robots travaillant dans un environnement d'exploitation, le procédé comprenant :
un nœud s'exécutant sur un ou plusieurs robots (101, 102, 103) réalisant :
l'exécution d'un ou de plusieurs comportements, relatifs à un plan parent actif des un ou plusieurs robots (101, 102, 103) dans lequel un plan parent est une liste de comportements à exécuter les uns après les autres ;
la création d'un ou de plusieurs instantanés relatifs à un comportement en cours d'exécution, dans lequel un instantané comporte une pluralité de champs, dans lequel chaque champ se voit attribuer une valeur ;
la capture d'informations sur la base d'un contexte parent relatif au comportement en cours d'exécution, dans lequel le contexte parent comporte des informations parentes du plan parent actif des un ou plusieurs robots (101, 102, 103) ;
le remplissage de la pluralité de champs des un ou plusieurs instantanés avec des valeurs relatives aux informations capturées, à l'environnement d'exploitation et aux un ou plusieurs robots (101, 102, 103) ;
la fermeture des un ou plusieurs instantanés avec un résultat des comportements en cours d'exécution ; et
un nœud de rapport s'exécutant sur les un ou plusieurs robots (101, 102, 103) réalisant :
l'agrégation des instantanés fermés et la communication des instantanés agrégés en tant que partie des informations ciblées pour l'affichage et le débogage desdites informations ciblées.

2. Procédé mis en œuvre par ordinateur selon la revendication 1, dans lequel le remplissage de la pluralité de champs des un ou plusieurs instantanés comprend :
le nœud s'exécutant sur les un ou plusieurs robots (101, 102, 103), l'ajout de métadonnées comportant des points **d'entrée** actifs attribués à des agents s'exécutant sur la pluralité de robots, les fonctions utilitaires, les robots exécutant le plan, la commutation entre les robots, les conflits et le gain dans les champs pertinents des un ou plusieurs instantanés ;
et
la fourniture d'un diagnostic sur la base des informations ciblées.

3. Procédé mis en œuvre par ordinateur selon la revendication 1, dans lequel la communication d'informations ciblées comprend :
le nœud s'exécutant sur les un ou plusieurs robots (101, 102, 103), évaluant les tâches attribuées à la pluralité de robots tout en exécutant les un ou plusieurs comportements ;
en réponse à l'évaluation de tâches, la détermination du temps passé à exécuter un ou plusieurs comportements dans le contexte des tâches évaluées ;
la réception d'une requête concernant au moins l'un ou plusieurs du temps nécessaire pour exécuter des tâches évaluées et du temps déterminé passé à exécuter un ou plusieurs comportements ;
et
le nœud de rapport s'exécutant sur un ou plusieurs robots (101, 102, 103), communiquant visuellement au moins l'un ou plusieurs du temps nécessaire pour exécuter les tâches évaluées et du temps déterminé passé à exécuter un ou plusieurs comportements,
dans lequel la communication visuelle comporte une forme, dans lequel la taille de la forme indique au moins l'un ou plusieurs du temps nécessaire pour exécuter les tâches évaluées et du temps déterminé passé à exécuter un ou plusieurs comportements.

4. Procédé mis en œuvre par ordinateur selon la revendication 1, dans lequel les informations ciblées comprennent des informations contextuelles relatives à la commutation des comportements entre les un ou plusieurs robots, dans lequel les informations contextuelles comportent au moins un des éléments suivants : une raison de la commutation, les comportements antérieurs associés aux un ou plusieurs robots avant la commutation, les comportements actuels associés aux un ou plusieurs robots après la commutation, des informations de conflit concernant l'exécution de la commutation par au moins un robot des un ou plusieurs robots, et des informations concernant un désaccord quant à l'exécution de comportements de commutation.

5. Procédé mis en œuvre par ordinateur selon la revendication 1, dans lequel la pluralité de champs comprend au moins un des éléments suivants : un champ d'activation d'état, un type de plan, une condition de transition, un résumé d'activation et un plan des coéquipiers.

6. Système pour générer et afficher des informations ciblées, le système comprenant :
une pluralité de robots (101, 102, 103) travaillant dans un environnement d'exploitation, dans lequel chaque robot comporte un processeur pour exécuter des instructions et une mémoire pour stocker les instructions ; une pluralité de nœuds de serveur s'exécutant sur un ou plusieurs serveurs (130) ; une pluralité de nœuds s'exécutant au niveau de la pluralité de robots en communication avec la pluralité de nœuds de serveur comportent :
l'exécution d'un ou de plusieurs comportements, relatifs à un plan parent actif de la pluralité de robots travaillant dans l'environnement d'exploitation, dans lequel un plan parent est une liste de comportements à exécuter les uns après les autres ;
la création d'un ou de plusieurs instantanés relatifs à un comportement en cours d'exécution, dans lequel un instantané comporte une pluralité de champs, dans lequel chaque champ se voit attribuer une valeur ;
la capture d'informations sur la base d'un contexte parent relatif au comportement en cours d'exécution, dans lequel le contexte parent comporte des informations parentes du plan parent actif ;
le remplissage de la pluralité de champs des un ou plusieurs instantanés avec des valeurs relatives aux informations capturées, à l'environnement d'exploitation et aux un ou plusieurs robots ;
la fermeture des un ou plusieurs instantanés avec un résultat des comportements en cours d'exécution ;
l'agrégation des instantanés fermés et la communication des instantanés agrégés en tant que partie des informations ciblées ; et
l'affichage et le débogage des informations ciblées relatives à la pluralité de robots travaillant dans l'environnement d'exploitation.

7. Système selon la revendication 6, comprenant également :
la réception d'une entrée indiquant qu'un second robot est disponible pour assister un premier robot parmi la pluralité de robots (101, 102, 103) ;
la fermeture d'un instantané relatif au comportement étant exécuté par le premier robot en réponse à l'entrée reçue ; et
la création d'un nouvel instantané relatif à au moins l'un ou plusieurs d'un plan, d'un comportement et d'un type de plan étant exécutés par le premier robot en assistance au second robot, dans lequel un type de plan comporte une liste de plans.

8. Système selon la revendication 7, comprenant également :
le remplissage du champ relatif aux informations récapitulatives avec une valeur indiquant que les premier et second robots exécutent le comportement ;
la mise à jour de l'identifiant du robot et des détails de tâche des deux robots pour le champ relatif à l'allocation de tâches ;
en réponse à la mise à jour de l'identifiant du robot et des détails de tâche, la vérification d'un gain obtenu grâce à l'assistance du second robot au premier robot ; et
en réponse à la vérification, le remplissage d'un champ relatif au gain avec une valeur indiquant la performance de l'exécution du comportement.

9. Système selon la revendication 7, comprenant également :
la création d'un instantané supplémentaire relatif à au moins l'un ou plusieurs d'un plan, d'un comportement et d'un type de plan étant exécutés par le second robot ; et
l'agrégation de l'instantané créé et la communication de l'instantané agrégé.

10. Système selon la revendication 7, comprenant également :
le remplissage de l'emplacement du premier et du second robot et des informations relatives à la tâche dans les champs correspondants du nouvel instantané ;
la détermination d'un score de confiance en tant que valeur pour un champ relatif au résultat de l'exécution d'un comportement,
dans lequel le score de confiance est représenté par une échelle indiquant la réussite ou l'échec ; et
l'agrégation du nouvel instantané et la communication de l'instantané agrégé en tant que partie des informations ciblées.

11. Système selon la revendication 7, comprenant également :
la capture de la distance parcourue et l'orientation du second robot assistant le premier robot ; et
en réponse à la capture, la vérification que l'orientation et la distance parcourue du second robot ont permis un alignement correct avec le premier robot avant le remplissage des champs du nouvel instantané ; et éventuellement
comprenant également :
la réception d'une requête relative au débogage en temps réel de l'assistance du second robot au premier robot ; et
la communication d'événements en direct capturés pendant que le second robot assistait le premier robot.

12. Système selon la revendication 6, comprenant également :
la réception d'entrées relatives à au moins l'un d'un comportement, d'un plan et d'un type de plan exécutés par la pluralité de robots (101, 102, 103) au sein d'un sous-ensemble d'une fenêtre temporelle, dans lequel la fenêtre temporelle comprend le temps passé par la pluralité de robots (101, 102, 103) à travailler dans l'environnement d'exploitation, dans lequel un type de plan comporte une liste de plans ; et
la communication de valeurs de champs des instantanés agrégés en tant que partie des informations ciblées au sein du sous-ensemble de la fenêtre temporelle et relatives à l'au moins un d'un comportement, d'un plan et d'un type de plan exécutés par les robots.

13. Système selon la revendication 7, comprenant également :
la réception d'une erreur relative à l'assistance du second robot au premier robot ;
l'identification du robot défaillant sur la base des valeurs dans l'instantané agrégé, dans lequel le second robot étant le robot défaillant ;
le lancement automatique d'un processus de réparation pour vérifier si un autre robot est disponible pour assister le premier robot ; et
sur la base de la disponibilité, le redéclenchement d'au moins un ou plusieurs d'un plan, d'un comportement et d'un type de plan étant exécutés par l'autre robot.

14. Support de stockage non transitoire lisible par ordinateur contenant des instructions y étant stockées, lesquelles, lorsqu'elles sont exécutées par le système selon l'une quelconque des revendications 6 à 13, amènent le système à réaliser le procédé selon l'une quelconque des revendications 1 à 5.
